# FASCICULE DE BREVET EUROPEEN

(11) **EP 0 519 776 B1**
(45) Date de publication et mention de la délivrance du brevet: **24.08.1994**
(21) Numéro de dépôt: 92401450.9
(22) Date de dépôt: 26.05.1992
(51) Int. Cl.: B62D 25/08, B60R 19/26

(54) **Façade antérieure perfectionnée pour véhicules automobiles**
Verbessertes Frontteil eines Kraftfahrzeuges
Improved automobile front

(30) Priorité: 19.06.1991 FR 9107539
(43) Date de publication de la demande: 23.12.1992
(73) Titulaire: ECIA - EQUIPEMENTS ET COMPOSANTS POUR L'INDUSTRIE AUTOMOBILE, F-25400 Audincourt (FR)
(72) Inventeur: Pinard, Eric, F-25150 Pont de Roide (FR); Lacombe, Marc, F-25400 Audincourt (FR)
(74) Mandataire: Mestre, Jean (FR)

(56) Documents cités:
- DE-A- 3 122 673
- FR-A- 2 181 044
- FR-A- 2 655 605
- US-A- 3 834 476
- US-A- 4 995 660

## Description

La presente invention concerne les véhicules automobiles et est relative, plus particulièrement, a une façade antérieure perfectionnée pour véhicules automobiles apte à servir de bâti-support pour le montage d'équipements, et aussi apte à renforcer la rigidité de la structure ou coque du véhicule destinée a la recevoir.

La tendance contemporaine des techniques de montage des véhicules automobiles fait, de plus en plus, appel à des robots ou à des automates programmables qui se substituent progressivement aux opérateurs travaillant sur les chaînes de production, et cela pour des interventions de plus en plus nombreuses et complexes.

Actuellement, au lieu de monter successivement les divers constituants ou équipements sur la structure ou coque d'un véhicule, on tend à préassembler ces divers constituants en sous-ensembles et ensembles autonomes qui, après avoir été réunis en entités et éventuellement contrôlés, sont placés tels quels et reunis à la structure ou coque du véhicule.

Une telle technique, pour séduisante quelle soit, n'est pas sans présenter d'inconvénients en particulier lorsqu'il s'agit de la façade antérieure d'un véhicule automobile.

Comme on le sait, une telle façade antérieure sert habituellement à supporter des équipements tels que des blocs optiques, des groupes moto-ventilateurs de refroidissement, des avertisseurs sonores, etc. En outre, une telle façade antérieure peut aussi parfois servir à réunir les flancs de la structure et des éléments de carrosserie telles que des ailes, calandres, etc.

Des tentatives ont déjà été faites pour construire une telle façade qui réussissent, tant bien que mal, a concilier des désidérata quel que peu contradictoires. Une solution est par exemple illustree par le document FR 2 625 164. Selon les informations divulguées par ce document, cette façade est faite de composants différents qu'il faut au préalable associer et assembler, au besoin par des jonctions amovibles, pour constituer un élément auto-porteur. Ces différents composants sont en tôle métallique ou en matériaux synthétiques.

On imagine sans difficulté les problèmes que pose ce type d'assemblage pour la confection d'une façade avant auto-portante faite de la réunion de composants juxtaposés et fixés les uns aux autres, en particulier lorsqu'il faut respecter des tolérances d assemblage relativement sévères pour le tout.

Le but de l'invention est de remédier à ce type de difficultés à l'occasion de la mise en oeuvre de la technique relatée par ce document.

L'invention a pour objet une façade avant pour véhicule automobile qui est fait d'une structure avec deux longerons latéraux munis chacun à son extrémité antérieure d'un embout, et qui est équipé d'un pare-chocs et où cette façade est destinée notamment à servir de bâti-support à des équipements tels des blocs optiques et des groupes motoventilateurs de refroidissement et qui est aussi destinée à être montée notamment sur ces embouts et à recevoir ce parechocs. Cette façade bâti-support est caractérisée en ce qu'elle a la configuration d'un panneau frontal avec deux zones latérales bordant une zone médiane et réunies par des traverses approximativement horizontales haute et basse, et en ce que chaque zone latérale est munie d'une embase équipée d'un boîtier destiné à recevoir un de ces embouts de manière à ce qu'il puisse v être déplacé relativement longitudinalement et/ou verticalement, et en ce que au boîtier est lié un socle destiné à recevoir le pare-choc de manière à ce qu'il puisse s'y déplacer relativement longitudinalement.

D'autres caractéristiques de l'invention ressortiront de la lecture de la description et des revendications qui suivent, ainsi que de l'examen du dessin annexé, donné seulement à titre d'exemple, où :

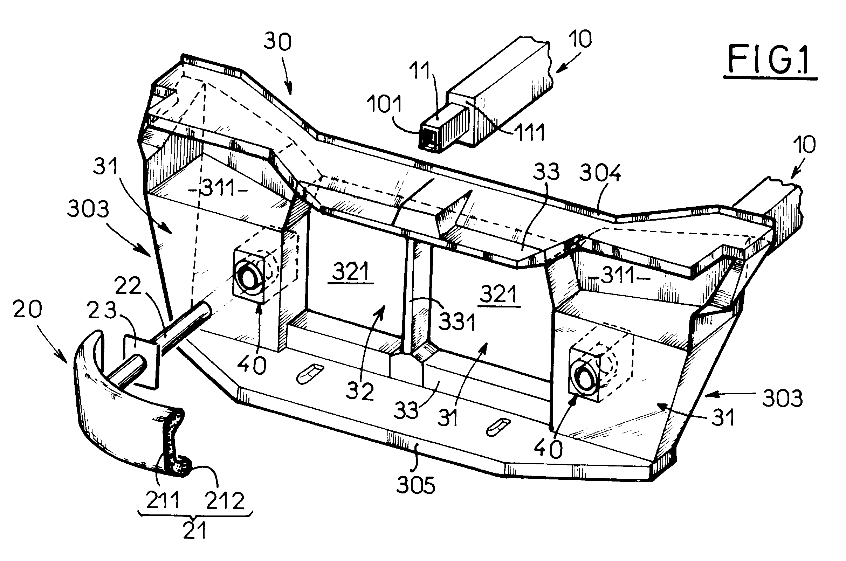

- la Figure 1 est une vue perspective schématique d'un mode de réalisation d'une façade antérieure selon l'invention;
- la Figure 2 est une section verticale partielle d'une partie essentielle de la façade antérieure selon l'invention représentant la manière dont lui sont associés la caisse ou structure et le pare-chocs;
- les Figures 3 et 4 sont des sections selon les plans 3-3 et 4-4 de la Figure 2;
- la Figure 5 est une vue analogue à celle de la Figure 2 d'un autre mode de réalisation d'une façade antérieure selon l'invention;
- la Figure 6 est une vue analogue à celle de la Figure 2 d'une autre variante d'exécution d'une façade antérieure selon l'invention;
- la Figure 7 est une vue de détail partielle d'une autre variante d'exécution d'une façade antérieure selon l'invention, vue par la face arrière;
- la Figure 8 est une section verticale partielle de la Figure 7 illustrant sa mise en oeuvre pour le montage d'un moteur, et;
- les Figures 9A, 9B et 9C et 10A et 10B sont diverses vues de détail de deux variantes de réalisation d'une façade selon l'invention équipée d'un fermoir de capot.

Les processus de construction, de montage et d'assemblage de véhicules automobiles étant bien connus dans la technique, ce qui suit est limité à ce qui concerne directement ou indirectement l'invention. Pour le surplus, le spécialiste de la technique considérée puisera dans les solutions classiques courantes a sa disposition pour faire face aux problèmes particuliers auxquels il est confronté.

Dans la description qui suit, un même numéro de référence identifie toujours un élément homologue quel que soit le mode de la réalisation.

Pour la commodité de l'exposé, on décrira successivement chacun des constituants d'une façade antérieure bâti-support selon l'invention avant d'en exposer la mise en oeuvre et les techniques de fabrication.

Une façade antérieure bâti-support selon l'invention est destinée à équiper un véhicule automobile qui est fait d'une structure ou coque. Comme il est connu, une telle structure habituellement mécanosoudée présente vers l'avant, repérée par rapport à l'axe longitudinal du véhicule, de préférence deux longerons 10 latéraux munis chacun à leur extrémité 101 antérieure d'un embout 11. Comme on peut l'observer sur les figures du dessin, le longeron 10 et l'embout 11 sont réunis par un épaulement 111. Ainsi, comme on peut le noter, le "maître-couple" de l'embout 11 est moindre que le "maître-couple" du longeron 10. De préférence, la section droite de l'embout 11 est polygonale par exemple approximativement carrée. Comme on peut le noter, cet embout 11, de préférence creux, est muni à l'intérieur d'une cloison 112 orientée approximativement perpendiculairement à l'axe longitudinal.

Comme il est classique, la partie antérieure d'un véhicule automobile est munie d'équipements qui sont les uns apparents et les autres masqués par exemple par un capot ou une calandre. Les equipements apparents sont par exemple les blocs optiques et le pare-chocs; les équipements masqués sont par exemple le groupe moto-ventilateur de refroidissement et l'avertisseur sonore. De tels équipements dont seul le pare-chocs est illustré, sont portés par la façade antérieure bâti-support selon l'invention.

Comme on peut l'observer sur les figures du dessin, un pare-chocs 20 comprend, habituellement, une poutre 21 faite d'un revêtement ou peau, extérieur 211 et d'une garniture intérieure 212. Une telle poutre est habituellement supportée, par exemple au voisinage de chacune de ses extrémités transversales par une tige 22 ou analogue.

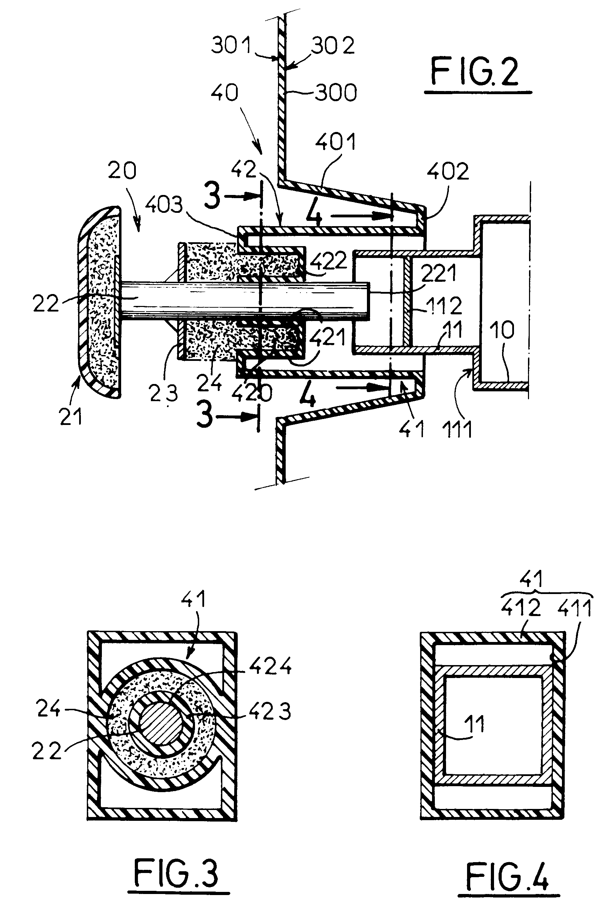

Comme on peut l'observer sur la Figure 2, cette tige 22 porte à l'opposé de son bout 221 libre un plateau 23 ou similaire qui en est rendu solidaire à l'aide de goussets ou analogues, comme illustré. Comme on peut l'observer, à la tige 22 est associé un tampon absorbeur 24 pour les raisons que l'on comprendra par la suite. Ce tampon absorbeur de tout type approprié, est relativement élastique.

Comme on peut le relever en examinant les diverses figures du dessin, une façade antérieure bâti-support 30 selon l'invention a la configuration d'un panneau frontal 300 avec un face avant 301, une face arrière 302, et qui est délimité par des côtés approximativement verticaux 303 et des bords approximativement horizontaux haut 304 et bas 305. Comme on peut l'observer, ce panneau frontal 300 présente aussi deux zones 31 latérales, à droite et à gauche, bordant une zone médiane 32 et réunies par des traverses 33 approximativement horizontales respectivement haute et basse.

Comme on peut l'observer, chaque zone latérale 31 est pourvue, à proximité de la traverse haute 33, d'un cuvelage 311 ou analogue destiné à recevoir un bloc optique non représenté. La zone médiane 32 est transpercée d'au moins un ajour 321 pour un groupe moto-ventilateur de refroidissement non représenté. Dans le mode de réalisation illustré, la zone médiane 32 est transpercée de deux ajours 321 séparés par un pilier 331 médian, approximativement vertical, joignant les traverses 33 haute et basse approximativement en leur milieu.

Une façace antérieure bâti-support selon l'invention est telle que chaque zone latérale 31 est munie d'une embase 40 non loin de la traverse 33 basse. Comme on peut l'observer, chaque embase 40 est équipée d'un boîtier 41 destiné à recevoir l'un des embouts 11 de manière à ce qu'il puisse y être déplacé relativement longitudinalement et/ou verticalement. Au boîtier 41 est lié un socle 42 destiné à recevoir le pare-chocs 20 de manière à ce qu'il puisse s'y déplacer relativement longitudinalement. Comme on peut l'observer, le boîtier 41 a une section droite de préférence rectangulaire avec des flancs 411 opposés verticaux et des jambes 412 approximativement horizontales réunissant les flancs 411. Comme on peut l'observer, le boîtier 41 est réuni au panneau frontal 300 pour en être solidaire par une paroi 401 et un coude appui 402 dirigé vers l'arrière en direction du longeron 10 et sur lequel on reviendra par la suite. Le socle 42 se présente à la manière d'une cuvette 420 annulaire, de préférence circulaire, en U ouverte vers l'avant. Cette cuvette 420 présente deux branches 421 approximativement parallèles réunies par un pont 422. Le socle 42 présente aussi un fourreau 423 tubulaire. Comme on peut le voir, le boîtier 41 et le socle 42 sont solidaires l'un de l'autre et réunis par exemple par un rebord 403.

La façade antérieure bâti-support 30 selon l'invention est montée sur la coque ou structure comme cela ressort en particulier sur la Figure 2. Cette façade antérieure bâti-support 30 reçoit le pare-chocs 20 comme cela est clairement illustré aussi sur la Figure 2. Comme on le voit, le boîtier 41 est monté sur l'embout 11 du longeron 10 de manière que ce dernier repose contre les flancs 411 et qu'il puisse y coulisser verticalement et longitudinalement entre les jambes 412; on observera que le coude appui 402 et l'épaulement 111 demeure en permanence face à face pour les raisons qui apparaîtront par la suite. Comme on le voit, le boîtier 41 et le socle 42 sont dans le prolongement l'un de l'autre et le fourreau 423 reçoit la tige 22 du pare-chocs de manière à ce qu'elle puisse y coulisser longitudinalement pour venir au besoin au contact de la cloison 112 par son bout 211 pour les raisons que l'on comprendra par la suite. On observera que le tampon amortisseur 24 solidaire de la tige 22 est en appui à la fois contre le plateau 23 et la cuvette 420 par l'intermédiaire de ses branches 421 et de son pont 422 pour les raisons que l'on comprendra par la suite.

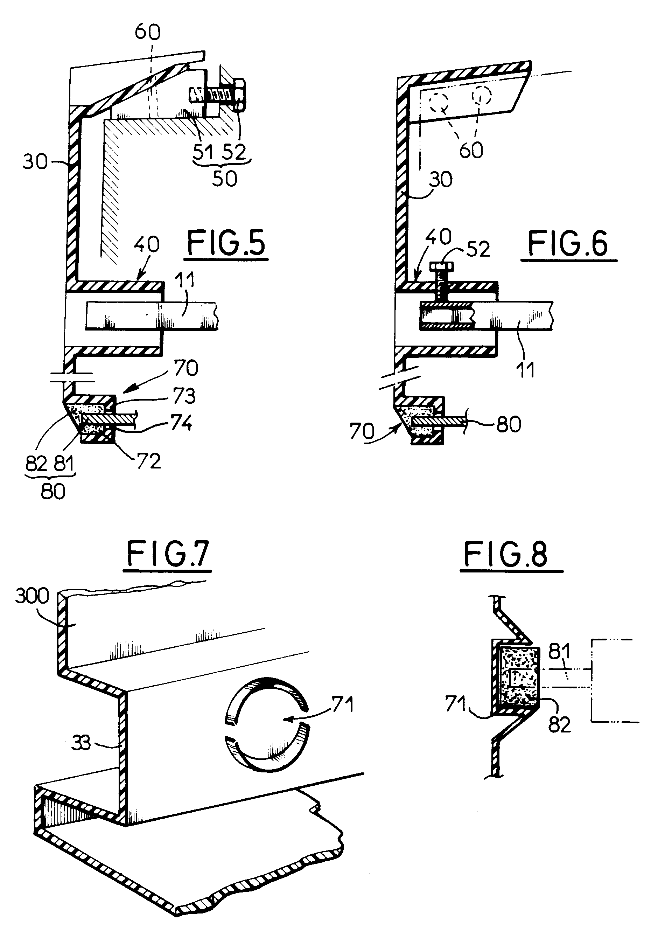

Comme on peut l'observer en particulier sur les Figures 5 et 6, un dispositif de réglage 50, interposé entre la structure et la façade antérieure qui l'équipe, est doté de deux degrés de liberté pour permettre un déplacement relatif de la façade antérieure par rapport à la structure essentiellement par translation longitudinale et/ou verticale. Ce dispositif de réglage, de tout type classique, comprend par exemple au moins un coin 51 (Figure 5) ou des vis 52 (Figure 7) On reviendra par la suite sur ce dispositif de reglage.

Des moyens de fixation 60, de tout type classique tels des vis, des boulons, des rivets, des soudures, permettent d'immobiliser relativement l'un à l'autre la façade antérieure bâti-support selon l'invention et la coque ou structure, réglages faits.

La façade antérieure bâti-support selon l'invention est aussi, de préférence, équipée en direction de l'arrière d'organes de montage 70 d'un moteur 80. Ces organes de montage, de préférence situés à proximité de la traverse horizontale basse 33 se présentent par exemple à la manière d'un puits 71 qui délimite un logement 72 avec un fond 73 s'il y a lieu transpercé d'un orifice 74. Le moteur 80 est muni à un endroit approprié d'une patte ou analogue 81 engagée dans l'orifice 74 et prenant appui sur les organes de montage par l'entremise d'un patin amortisseur 82.

Le patin amortisseur 82 est de tout type classique courant habituellement désigné dans la technique par le nom "silent block".

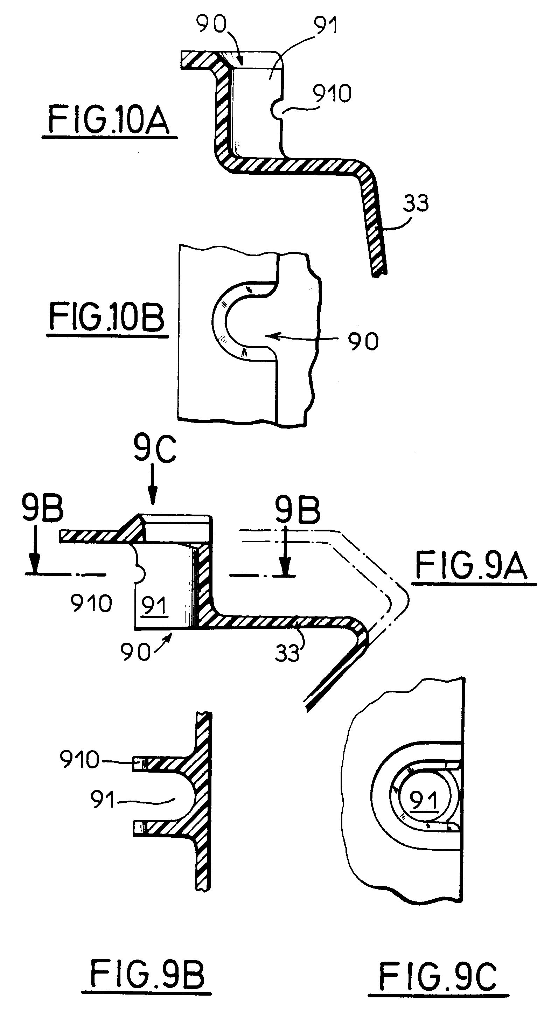

S'il y a lieu, la taverse horizontale haute 33 est équipée d'un fermoir 90 de capot. Ce fermoir se compose notamment d'au moins une gâche 91 située à proximité de l'une, et de préférence, des deux extrémités latérales de cette traverse haute. Comme illustré sur les Figures 9 et 10 qui sont des vues partielles de deux variantes de réalisation différentes, chaque gâche 91 se présente à la manière d'un alvéole pratiquement demi-cylindrique muni d'une entrée bisautée et s'il y a lieu d'une rainure, comme dessiné clairement.

On exposera maintenant le rôle des embases 40 qui équipent la façade antérieure bâti-support selon l'invention.

Le boîtier 41 de section droite rectangulaire permet, entre autres, lors de son emboîtement sur les embouts des longerons un certain rattrapage des dispersions des mesures transversales de la structure, entre certaines limites, et aussi un renforcement de la structure du véhicule, en particulier à la torsion. Le coulissement longitudinal du boîtier sur les embouts des longerons permet le réglage des jeux d'accostage longitudinaux avec les autres constituants de la carrosserie tels que les ailes et capot. On observera aussi, qu'en outre, ce degré de liberté longitudinal permet si besoin est, une séparation momentanée avec une certaine amplitude, par exemple 50 ou 100 mm environ, afin d'augmenter le jeu disponible entre la face arrière de la façade antérieure bâti-support et tous les équipements qu'elle porte, d'une part, et la face avant d'un groupe moteur, d'autre part, pour faciliter des interventions d'entretien ou de réparation. En outre, le coulissement vertical qu'autorise le contact des flancs 411 du boîtier 41 avec les embouts 11 permet un réglage des jeux de présentation verticaux de la façade antérieure bâti-support, par rapport aux éléments de la carrosserie, comme on l'a indiqué à propos du coulissement longitudinal.

On relévera donc que la technique d'emboîtement utilisée avec deux degrés de liberté, respectivement longitudinal et vertical, permet tout à la fois une amélioration de la rigidité de la coque ou structure, notamment à la torsion, ainsi qu'un réglage au montage final par rapport aux éléments de la carrosserie pour rattraper les dispersions des tolérances de fabrication et aussi, si besoin était, une amélioration temporaire, à volonté, de l'accessibilité par une separation momentanée due à un éloignement, entre certaines limites, de la façade antérieure bâti-support par rapport à ce que contient le compartiment antérieur du véhicule.

La façade antérieure bâti-support apporte aussi des avantages nombreux au titre de la sécurité, comme cela ressort clairement de ce qui suit.

Pour des chocs qui surviennent à des vitesses inférieures à 4 km/h environ, tels que ceux qui surviennent au cours des manoeuvres de rangement d'un véhicule, la poutre 21, avec son revêtement 211 et sa garniture 212, les absorbe seule sans aucune déformation permanente notable puisque le pare-chocs repose par l'intermédiaire de sa tige 22 sur la façade antérieure bâti-support, par l'entremise du socle 42 de son embase 40
Pour des chocs qui surviennent pour des vitesses un peu supérieures, par exemple comprises entre 4 et 8 km/h, ou pour des chocs obliques par rapport à l'axe longitudinal du véhicule, le tampon absorbeur 24, relativement élastique, se déforme du fait de la possibilité de coulissement longitudinal de la tige 22 dans le fourreau 423.

Pour des vitesses encore supérieures, comprises entre 8 et 10 km/h par exemple, lorsque le tampon absorbeur 24 s'est totalement déformé, le bout 221 de la tige 22 rencontre la cloison 112 située à l'intérieur de l'embout 11; la tige 22 se déforme alors pour dissiper l'énergie du choc.

Pour des vitesses plus importantes, comprises entre 10 et 15 km/h par exemple, c'est alors l'ensemble de la façade antérieure bâti-support qui recule en coulissant sur l'embout 11 des longerons par l'intermédiaire des flancs 411 de son boîtier 41 jusqu'à ce que le coude-appui 402 vienne rencontrer l'épaulement 111
Pour des vitesses supérieures à 15 km/h, outre ce recul, il y a déformation de l'embase 40 de la façade antérieure bâti-support par écrasement contre le longeron 10, écrasement qui assure l'absorption de l'énergie du choc.

On voit donc que la façade antérieure bâti-support selon l'invention permet une relative progressivité de l'absorption de l'énergie cinétique lors de chocs et que les parties mises en cause interviennent successivement par palier d'où aussi une progressivité pour les interventions éventuelles de réparation ou de remplacement. Cette activité échelonnée, résulte notamment des jeux initiaux qui existent entre le bout 221 et la cloison 112, d'une part, et le coude-appui 402 et l'épaulement 111 d'autre part.

Par ailleurs, du fait du degré de liberté longitudinale conféré à la face antérieure bâti-support selon l'invention, on comprend qu'il y a là une aptitude supplémentaire à un réglage précis.

L'exposé qui précède permet de percevoir clairement toutes les caractéristiques de la façade antérieure bâti-support selon l'invention ainsi que tous les avantages qu'elle offre.

En tant que bâti-support, cette façade antérieure permet la fixation d'équipements spécifiques à la partie antérieure du véhicule tels que des avertisseurs sonores, des groupes moto-ventilateurs notamment qui peuvent y être installés sous forme de sous-ensembles préassemblés et éventuellement précontrôlés hors de la ligne de montage proprement dite du véhicule
Cette façade antérieure bâti-support permet aussi de par sa configuration un certain rattrappage des dispersions transversales de la structure qui apparaissent notamment au niveau des embouts des longerons et renforce la robustesse notamment à la torsion de cette structure. Cette façade antérieure bâti-support permet aussi un réglage des jeux d'accostage verticaux et longitudinaux par rapport aux constituants des éléments de la carrosserie tels que les capot et ailes par exemple. Le degré de liberté longitudinal permet, en outre, un dégagement momentané et à volonté de ce que contient le compartiment antérieur du véhicule en particulier des moteurs et accessoires situés à proximité de la face arrière de la façade antérieure en autorisant une certaine amplitude de séparation soit pour accéder directement aux éléments à prendre en compte, soit un dégagement encore plus important pour une dépose éventuelle de l'ensemble du groupe moteur. Comme on le comprend, les organes de montage 70 du moteur 80 servent au filtrage des vibrations et à la compensation du couple de basculement qui se manifestent lors du fonctionnement du véhicule.

Cette façade antérieure bâti-support participe en outre activement à la protection contre les chocs en incorporant un élément absorbeur d'énergie, associé habituellement aux pare-chocs, et en permettant un certain déplacement longitudinal par recul élastique ou permanent avec au besoin déformation, pour assurer l'absorption de l'énergie cinétique des chocs
De préférence, une telle façade antérieure bâti-support selon l'invention est faite essentiellement de matériaux synthétiques dont les propriétés sont, si nécessaire, modifiées à l'aide de charges et/ou de fibres de renfort par exemple des fibres de verre ou de carbone.

Ces matériaux synthétiques sont mis en forme par moulage ou formage.

On utilise par exemple des matériaux désignés dans la technique sous l'appelation SMC (Sheet Molding Compound) ou TRE (Thermoplastique Renforcé Estampable). On peut aussi utiliser des polyesters ou des polyamides.

Suivant le matériau utilisé et les propriétés à lui conférer, on met en oeuvre des techniques de moulage soit par compression, soit par injection ou d'autres techniques usuelles en fonction de la dimension des pièces à obtenir.

Il va de soi que cette façade bâti-support selon l'invention peut être métallique faite par exemple en tôle appropriée ou à base d'aluminium s'il y a lieu injecté
De ce qui précède, on constate immédiatement que la façade bâti-support selon l'invention sert en quelque sorte de pièce "noyau" d'assemblage qui joue aussi le rôle d'une servante ou d'un desserte d'atelier pour recevoir le pare-chocs par exemple et pour supporter notamment des blocs optiques et au moins un groupe moto-ventilateur, etc. On saisit clairement aussi que la façace antérieure bâti-support selon l'invention a un rôle structurel de cohésion de la structure en liant les embouts des longerons latéraux, et qu'elle participe aussi à la sécurité en permettant l'absorbtion d'une certaine énergie en cas de choc, notamment frontal, et en assurant la répartition de cette énergie en vue de sa dissipation sans dommage pour les occupants.

Du fait que cette façade antérieure bâti-support est fabriquée d'un seul tenant, il est aisé d'obtenir des tolérances de fabrication serrées et une bonne reproductibilité.

De plus, cette façade antérieure bâti-support joue aussi un rôle de barrière acoustique en canalisant les flux d'air et contribue à l'amélioration du confort en absorbant des vibrations du moteur et en réduisant le bruit, de même qu'elle contribue à l'étanchéité et à la protection du moteur.

Par le choix des matériaux dont elle est faite, la façade antérieure bâti-support selon l'invention est apte à supporter au moins localement "des points chauds" à température élevée de l'ordre de 150°C par exemple tels que ceux qui se manifestent à proximité des blocs optiques.

## Revendications

1. Façade antérieure pour véhicule automobile qui est fait d'une structure avec deux longerons (10) latéraux munis chacun à son extrémité antérieure (101) d'un embout (11) et qui est équipé d'un pare-chocs (20), cette façade destinée notamment à servir de bâti-support à des équipements tels des blocs optiques et au moins un groupe motoventilateur de refroidissement et aussi destinée à être montée notamment sur ces embouts (11) et à recevoir ce parechocs (20) étant caractérisée en ce que cette façade bâti-support (30) a la configuration d'un panneau frontal (300) avec deux zones latérales (31) bordant une zone médiane (32) et réunies par des traverses (33) approximativement horizontales haute et basse, en ce que chaque zone latérale (31) est munie d'une embase (40) équipée d'un boîtier (41) destiné à recevoir un de ces embouts (11) de manière à ce qu'il puisse y être déplacé relativement longitudinalement et/ou verticalement, et en ce que au boîtier est lié un socle (42) destiné à recevoir le pare-chocs (20) de manière à ce qu'il puisse s'y déplacer relativement longitudinalement.

2. Façade selon la revendication 1, caractérisée en ce que le boîtier (41) présente une section droite rectangulaire avec des flancs (411) opposés verticaux et des jambes (412) les réunissant, ainsi qu'avec un coude-appui (402) dirigé vers l'arrière en direction du longeron (10), et en ce que entre ces flancs (411) est logé cet embout (11) réuni au longeron (10) par un épaulement (111) de manière que l'embout (11) repose contre les flancs (411) et puisse y coulisser verticalement et longitudinalement entre les jambes (412), les coude-appui (402) et épaulement (111) demeurant face à face.

3. Façade selon la revendication 1 ou 2, caractérisée en ce que le socle (42) se présente à la manière d'une cuvette (420) annulaire en U ouverte vers l'avant avec deux branches (421) approximativement parallèles réunies par un pont (422) et avec un fourreau (423) tubulaire, et en ce que ce fourreau (423) reçoit une tige (22) du pare-chocs (20) de manière à ce qu'elle puisse y coulisser longitudinalement.

4. Façade selon la revendication 3, caractérisé en ce que la cuvette (420) est destinée à recevoir un tampon absorbeur (24) associé à la tige (22).

5. Façade selon l'une quelconque des revendications 1 à 4, caractérisée en ce que le boîtier (41) et le socle (42) sont solidaires l'un de l'autre et réunis au panneau frontal (300) par une paroi (401).

6. Façade selon la revendication 5, caractérisée en ce que ces boîtier (41) et socle (42) sont dans le prolongement l'un de l'autre.

7. Façade selon la revendication 6, caractérisée en ce que ce fourreau (423) est dans l'alignement de cet embout (11) et en ce que cet embout (11) est muni d'une cloison (112) intérieure contre laquelle peut venir buter le bout (221) de cette tige (22).

8. Façade selon l'une quelconque des revendications 1 à 7, caractérisée en ce qu'elle est équipée d'un dispositif de réglage (50) à deux degrés de liberté interposé entre la structure pour permettre de la déplacer relativement longitudinalement et/ou verticalement.

9. Façade selon l'une quelconque des revendications 1 à 8, caractérisée en ce qu'elle est équipée de moyens de fixation (60) intercalés entre la structure pour la fixer à cette dernière.

10. Façade selon l'une quelconque des revendications 1 à 9, caractérisée en ce qu'elle est munie sur sa traverse basse (33) en direction de l'arrière, d'organes de montage (70) d'un moteur.

11. Façade selon la revendication 10, caractérisée en ce que ces organes de montage (70) se présentent à la manière d'un puits (71) ménageant un logement (72) avec un fond (73) percé éventuellement d'un orifice (74) et destiné à recevoir un amortisseur élastique et une patte associée au moteur

12. Façade selon l'une quelconque des revendications 1 à 11, caractérisée en ce que la zone médiane (32) est transpercée d'au moins un ajour (321) pour un groupe motoventilateur de refroidissement.

13. Façade selon la revendication 12, caractérisée en ce que la zone médiane (32) est transpercée de deux ajours (321) séparés par un pilier (331) approximativement vertical joignant les traverses (33) haute et basse.

14. Façade selon l'une quelconque des revendications 1 à 13, caractérisée en ce que chaque zone latérale (31) est pourvue à proximité de la traverse haute (33) d'un cuvelage (311) destiné à recevoir un bloc optique.

15. Façade selon l'une quelconque des revendications 1 à 14, caractérisée en ce qu'elle est faite en matériaux synthétiques avec éventuellement des charges et/ou des renforts en fibres.

16. Façade selon l'une quelconque des revendications 1 à 14, caractérisée en ce qu'elle est faite en matériaux métalliques.

## Claims

1. Front for automobile which is made as one structure with two side members (10) each provided at its front end (101) with a connector (11) and which is equipped with a bumper (20), this front being intended particularly to serve as a support structure for equipment such as optical units end at least one engine cooling fan assembly and also intended to be mounted particularly on the connectors (11) and to receive the bumper (20), characterised in that the front support structure (30) has the configuration of a front panel (300) with two lateral zones (31) bordering a middle zone (32) and linked by approximately horizontal top and bottom crosspieces (33), that each lateral zone (31) is provided with a seating (40) equipped with a housing (41) intended to receive one of these connectors (11) in such a way that it can be displaced there relatively longitudinally and/or vertically, and that there is connected to the housing a base (42) intended to receive the bumper (20) in such a way that it can be displaced there relatively longitudinally.

2. Front as claimed in Claim 1, characterised in that the housing (41) has a rectangular cross-section with opposing vertical flanks (411) and cross-members (412) connecting them, and with an elbow support (402) directed towards the rear in the direction of the side member (10), and that between these flanks (411) is accommodated this connector (11) linked to the side member (10) by a shoulder (111) in such a way that the connector (11) rests against the flanks (411) and can slide there vertically and longitudinally between the cross-members (412), the elbow support (402) and the shoulder (11) remaining face to face.

3. Front as claimed in Claim 1 or 2, characterised in that the base (42) takes the form of an annular U-shaped cup (420) which is open towards the front with two approximately parallel branches (421) connected by a bridge (422) and with a tubular sleeve (423), and that this sleeve (423) receives a rod (22) of the bumper (20) in such a way that it can slide there longitudinally.

4. Front as claimed in Claim 3, characterised in that the cup (420) is intended to receive a shock-absorbing pad (24) associated with the rod (22).

5. Front as claimed in any one of Claims 1 to 4, characterised in that the housing (41) and the base (42) ore integral with one another and connected to the front panel (300) by a wall (401).

6. Front as claimed in Claim 5, characterised in that the housing (41) and the base (42) are extensions of one another.

7. Front as claimed in Claim 6, characterized in that the sleeve (423) is in alignment with the connector (11) and that this connector (11) is provided with an internal partition (112) against which the end (221) of the rod (22) comes to rest.

8. Front as claimed in any one of Claims 1 to 7, characterised in that it is equipped with a control device (50) with two degrees of freedom interposed amongst the structure to enable it to be displaced relatively longitudinally and/or vertically.

9. Front as claimed in any one of Claims 1 to 8, characterised in that it is equipped with fixing means (60) inserted amongst the structure in order to fix it to the latter.

10. Front as claimed in any one of Claims 1 to 9, characterised in that it is provided with engine-mounting elements (70) on its bottom crosspiece (33) in the direction of the rear.

11. Front as claimed in Claim 10, characterised in that the mounting elements (70) take the form of a well (71) providing a compartment (72) with a base (73) which may be pierced with a hole (74) and is intended to receive a resilient shock-absorber and a lug associated with the engine.

12. Front as claimed in any one of Claim 1 to 11, characterised in that the middle zone (32) is pierced by at least one opening (321) for an engine-cooling fan assembly.

13. Front as claimed in Claim 12, characterised in that the middle zone (32) is pierced by two openings (321) separated by an approximately vertical pillar (331) joining the top and bottom crosspieces (33).

14. Front as claimed in any one of Claims 1 to 13, characterised in that each lateral zone (31) is provided near the top crosspiece (33) with a casing (311) intended to receive an optical unit.

15. Front as claimed in any one of Claims 1 to 14, characterised in that it is made from synthetic materials which may have fillings/and or reinforcements of fibres.

16. Front as claimed in any one of Claim 1 to 14, characterised in that it is made from metallic materials.

## Patentansprüche

1. Frontteil eines Kraftfahrzeuges, welches aus einer Struktur mit zwei seitlichen Längsträgern (10) besteht, welche jeweils an ihrem vorderen Ende (101) mit einem Ansatzstück (11) ausgestattet sind, und welches mit einer Stoßstange (20) ausgerüstet ist, wobei dieses Frontteil insbesondere dafür bestimmt ist, als Halterung für verschiedene Ausrüstungen zu dienen, wie zum Beispiel optische Blöcke und mindestens einen Lüftersatz, und welches ebenfalls dafür bestimmt ist, insbesondere an diesen Ansatzstücken (11) montiert zu werden und die Stoßstange (20) aufzunehmen,
**dadurch gekennzeichnet, daß**
dieses als Halterung dienende Frontteil (30) die Konfiguration eines Frontpaneels (300) mit zwei Seitenbereichen (31) hat, welche einen mittleren Teil (32) umgeben und mit Hilfe von weitgehend horizontalen oberen und unteren Querträgern (33) verbunden sind, und dadurch, daß jeder der seitlichen Bereiche (31) mit einem Stecksitz (40) ausgerüstet ist, welcher mit einem Gehäuse (41) bestückt ist, welches dafür bestimmt ist, eines dieser Ansatzstücke (11) so aufzunehmen, daß es darin relativ in Längsrichtung und/oder in senkrechter Richtung bewegt werden kann, und dadurch, daß an dem Gehäuse ein Sockel (42) befestigt ist, welcher dafür bestimmt ist, die Stoßstange (20) so aufzunehmen, daß sie sich darin relativ in Längsrichtung bewegen kann.

2. Frontteil nach Anspruch 1,
**dadurch gekennzeichnet, daß**
das Gehäuse (41) einen rechteckigen Querschnitt mit gegenüberliegenden senkrechten Flanken (411) und Streben (412), welche letztere miteinander verbinden, sowie ein nach hinten in Richtung des Längsträgers (10) gerichtetes Kniestück (402) aufweist, und dadurch, daß zwischen diesen Flanken (411) ein Ansatzstück (11) gelagert ist, welches über eine Schulter (111) mit dem Längsträger (10) so verbunden ist, daß das Ansatzstück (11) zwischen den Flanken (411) liegt und dort in senkrechter Richtung und in Längsrichtung zwischen den Streben (412) gleiten kann, wobei das Kniestück (402) und die Schulter (111) vis-à-vis angeordnet sind.

3. Frontteil nach einem der Ansprüche 1 oder 2,
**dadurch gekennzeichnet, daß**
der Sockel (42) die Form einer ringförmigen Vertiefung (420) in Form eines nach offen U mit zwei weitgehend parallelen Schenkeln (421) hat, welche durch einen Mittelsteg (422) verbunden sind, und eine rohrförmige Manschette (423) aufweist, und dadurch, daß diese Manschette (423) ein Gestänge (22) der Stoßstange (20) so aufnimmt, daß es dort in Längsrichtung gleiten kann.

4. Frontteil nach Anspruch 3,
**dadurch gekennzeichnet, daß**
die Vertiefung (420) dafür bestimmt ist, einen mit dem Gestänge (22) verbundenen Stoßdämpfer (24) aufzunehmen.

5. Frontteil nach einem der Ansprüche 1 bis 4,
**dadurch gekennzeichnet, daß**
das Gehäuse (41) und der Sockel (42) miteinander fest verbunden sind und über eine Wand (401) an dem Frontpaneel (300) befestigt sind.

6. Frontteil nach Anspruch 5,
**dadurch gekennzeichnet, daß**
das Gehäuse (41) und der Sockel (42) in einer Bahn zueinander angeordnet sind.

7. Frontteil nach Anspruch 6,
**dadurch gekennzeichnet, daß**
die Manschette (423) mit dem Ansatzstück (11) gefluchtet ist, und dadurch, daß dieses Ansatzstück (11) mit einer Innenwand (112) versehen ist, an der sich das Endstück (221) des Gestänges (22) abstützen kann.

8. Frontteil nach einem der Ansprüche 1 bis 7,
**dadurch gekennzeichnet, daß**
es mit einer Reguliervorrichtung (50) mit zwei Freiheitsgraden ausgerüstet ist, welche zwischen der Struktur angeordnet ist, damit diese relativ in Längsrichtung und/oder senkrechter Richtung bewegt werden kann.

9. Frontteil nach einem der Ansprüche 1 bis 8,
**dadurch gekennzeichnet, daß**
es mit Befestigungsvorrichtungen (60) ausgerüstet ist, welche zwischen der Struktur eingeschoben sind, um diese daran zu befestigen.

10. Frontteil nach einem der Ansprüche 1 bis 9,
**dadurch gekennzeichnet, daß**
es an seinem unteren Querträger (33) in rückwärtiger Richtung mit Montageorganen (70) für den Einbau eines Motors ausgerüstet ist.

11. Frontteil nach Anspruch 10,
**dadurch gekennzeichnet, daß**
diese Montageorgane (70) die Form eines Schachtes (71) haben, welcher eine Aufnahme (72) mit einem Boden (73) bildet, der eventuell mit einer Öffnung (74) versehen und dafür bestimmt ist, einen elastischen Stoßdämpfer und ein mit dem Motor verbundenes Befestigungseisen aufzunehmen.

12. Frontteil nach einem der Ansprüche 1 bis 11,
**dadurch gekennzeichnet, daß**
der mittlere Bereich (32) mit mindestens einem Ausschnitt (321) für die Aufnahme eines Lüftersatzes versehen ist.

13. Frontteil nach Anspruch 12,
**dadurch gekennzeichnet**, **daß**
der mittlere Bereich (32) mit zwei Ausschnitten (321) versehen ist, welche durch einen weitgehend senkrechten Holm (331) unterteilt sind, welcher die oberen und unteren Querträger (33) miteinander verbindet.

14. Frontteil nach einem der Ansprüche 1 bis 13,
**dadurch gekennzeichnet**, **daß**
jeder der Seitenbereiche (31) in der Nähe des oberen Querträgers (33) mit einer Einsenkung (311) versehen ist, welche dafür bestimmt ist, einen optischen Block aufzunehmen.

15. Frontteil nach einem der Ansprüche 1 bis 14,
**dadurch gekennzeichnet, daß**
es aus einem Kunststoff hergestellt ist, welcher eventuell ein Füllmaterial und/oder Verstärkungsfasern enthält.

16. Frontteil nach einem der Ansprüche 1 bis 14,
**dadurch gekennzeichnet, daß**
es aus einem metallischen Werkstoff hergestellt ist.
